## Europäisches Patentamt

## European Patent Office

## Office européen des brevets

(11) Veröffentlichungsnummer: **0 140 072**

**A2**

(12) # EUROPÄISCHE PATENTANMELDUNG

(21) Anmeldenummer: 84110736.0

(22) Anmeldetag: 08.09.84

(51) Int. Cl.⁴: **B 01 D 39/10**
B 01 J 35/04

(30) Priorität: 08.09.83 DE 3332345

(43) Veröffentlichungstag der Anmeldung:
08.05.85 Patentblatt 85/19

(84) Benannte Vertragsstaaten:
AT BE CH DE FR GB IT LI LU NL SE

(71) Anmelder: Kernforschungsanlage Jülich Gesellschaft
mit beschränkter Haftung
Postfach 1913
D-5170 Jülich(DE)

(71) Anmelder: Schoeller, Jochen
Stürtzstrasse 25
D-5160 Düren(DE)

(72) Erfinder: Iniotakis, Nicolas
Kopernikusstrasse 64
D-5170 Jülich(DE)

(72) Erfinder: von der Decken, Claus-Benedict, Prof.
Reumont Strasse 34
D-5100 Aachen(DE)

(72) Erfinder: Fröhling, Werner, Dr.
Keltenstrasse 38
D-5160 Düren(DE)

(72) Erfinder: Schoeller, Jochen
Stürtzstrasse 25
D-5160 Düren(DE)

(72) Erfinder: Grossmann, Hermann, Dr.
Bergstrasse 32
D-7540 Neuenbürg-Arnbach(DE)

(54) Feinsieb und Feinsiebstapel sowie deren Verwendung und Verfahren zur Herstellung von Feinsieben.

(57) Durch eine die Maschenweite verengende galvanische und/oder chemische Abscheidung von Metall auf Metallgeweben werden Feinsiebe mit beliebig feiner einstellbarer Größe der Durchlaßöffnung erhalten, die ohne weiteres bis herab zu 0,01 μm gewählt werden kann, wobei durch Vergrößerung der Sieboberfläche durch Wellung oder Fältelung insgesamt tragbare Druckverluste über das Sieb hinweg erreicht werden können. Durch vergröbernde Beschichtung kann zusätzlich zur Siebwirkung eine Absorberwirkung erzielt werden. Während die galvanische Beschichtung durch die Geometrie des dabei wirkenden Feldes bestimmt wird, so daß Vorder- und Rückseite mit unterschiedlichem Metall von beispielsweise unterschiedlicher katalytischer Wirkung beschichtet werden können, erfolgt die Metallabscheidung stromlos gleichmäßig über die gesamte zur Verfügung stehende Oberfläche verteilt, d. h. auch über die inneren Bereiche, wodurch die materielle Beschaffenheit der Sieboberfläche zusätzlich abgewandelt werden kann. Solche Siebe, insbesondere in Form von Siebstapeln aus gewellten Feinsieben, können für die katalytische Gasreinigung nützlich sein.

FIG.1

Croydon Printing Company Ltd.

Kernforschungsanlage Jülich
Gesellschaft mit beschränkter Haftung

## <u>Feinsieb und Feinsiebstapel sowie deren Verwendung und Verfahren zur Herstellung von Feinsieben</u>

Die Erfindung bezieht sich auf ein Feinsieb in Form eines beschichteten Metallgewebes sowie auf einen Feinsiebstapel und deren Verwendung,und sie umfaßt ferner ein Verfahren zur Herstellung von Feinsieben.

Als Feinsieb wird im Rahmen der vorliegenden Beschreibung ein beschichtetes Metallgewebe verstanden, das - je nach Behandlungsdauer- und Anwendungszweck - feine bis feinste Öffnungen bis herab zu Moleküldimensionen aufweist.

Metallgewebe zeichnen sich durch eine gute mechanische und Temperaturbeständigkeit und - bei Verwendung entsprechender Materialien - durch Korrosionsfestigkeit und hohe Effektivität bei definierter "Porengröße" und niedrigem Druckverlust aus. Sie finden daher eine breite Anwendung als Feinfilter in diversen Bereichen, wie z.B. der chemischen und petrochemischen Industrie, in der Kerntechnik, bei pharmazeutischen Prozessen und Umweltschutzkontrollen, sowie in der Nahrungsmittel -und Getränkeherstellung und der Luft- und Raumfahrtindustrie.

Ein wesentlicher Nachteil der Metallgewebe besteht allerdings in der auch bei feinen Geweben noch relativ großen Maschenweite, die nur Teilchen mit einem Durchmesser von mehr als etwa 5 $\mu$m zurückhalten kann, während die Partikelgrößen von abzutrennenden Verunreinigungen in Gasen und/oder Flüssigkeiten um Größenordnungen geringer sein können.

Man hat zwar unter erheblichem Aufwand die Metallgewebeherstellung kürzlich noch verfeinert (z.B. bei Fugi in Japan) und gelangt bis zu Maschenweiten von ~2 $\mu$m, jedoch ist der Preis dieser auf dem Markt befindlichen Feingewebe um einen Faktor 4 - 5 gegenüber dem 5 $\mu$m-Gewebe erhöht.

.699

-2-

Für die Abscheidungen solcher Feinstpartikeln werden daher nach Möglichkeit Faserfilze mit abscheidungsaktiven Feinstfasern verwendet, deren Filterwirkung stärker durch die große Oberfläche eines Gewirrs von Feinstfasern bestimmt wird als durch die effektive Öffnungsweite, die für den Druckverlust maßgebend ist.

In Annäherung an solche meist auf Textil- oder Keramikbasis hergestellten Feinstfilter wurden bereits einseitig mit einer aufgesinterten Metallpulverschicht versehene Metallgewebe ("Supramesh" der Firma Pall Process Filtration Limited) hergestellt, die aus Flüssigkeiten Teilchen mit einer Größe von >1,5 µm nominell bzw. >15 µm absolut und aus Gasen von mehr als 0,5 µm nominell bzw. 3 µm absolut zurückhalten. Auch von diesen porös beschichteten Metallgeweben werden also feinste Teilchen kaum zurückgehalten, obwohl der durch solche Materialien bedingte Druckverlust deutlich über dem der unbeschichteten Gewebe liegt.

Aufgabe der Erfindung ist daher, die Bereitstellung von Feinsieben, die die guten Eigenschaften der Metallgewebe mit einem verbesserten Rückhaltevermögen verbinden, ohne jedoch zu wesentlich überhöhten Druckverlusten und Kosten zu führen.

Das zu diesem Zweck entwickelte Feinsieb aus beschichtetem Metallgewebe ist im wesentlichen dadurch gekennzeichnet, daß die Beschichtung durch eine die Maschenweite verengende galvanische und/oder chemische Metallabscheidung gebildet wird.

Bei solchen Feinsieben läßt sich das Rückhaltevermögen bzw. die Filterfeinheit durch Kontrolle der Abscheidung steuern und ohne weiteres bis in Bereiche von 0,01 μm herab ausdehnen und eine definierte Öffnungsweite einstellen. Überraschenderweise ist der durch die Verengung der Maschen bedingte Druckverlust nicht übermäßig hoch und kann ohne weiteres durch Vergrößerung der Fläche, insbesondere durch eine Wellung oder Fältelung des Materials, je nach Feinheitsgrad weitgehend kompensiert oder überkompensiert werden. Der Aufpreis für die Verringerung der Maschenweite liegt dabei unterhalb von 100 %.

Das zu beschichtende Gewebe selbst kann aus einem unedleren Material sein, wodurch die Kosten für solche Filter zusätzlich gering gehalten werden können.

Ferner ist eine Beschichtung mit unterschiedlichen Metallen, die als Katalysatoren bekannt sind, wie weiter unten näher erläutert, möglich, so daß auf engem Raum beispielsweise unterschiedliche Katalysatoren zur Auswirkung kommen können.

Für die Beschichtung wird das Metallgewebe in an sich bekannter Weise zunächst gereinigt und entfettet und gegebenenfalls gebeizt bzw. desoxidiert zur Entfernung von Metalloxiden. Daran schließt sich insbesondere eine Sensibilisierung (je nach Abscheidungsart und abzuscheidendem Metall z.B. in saurer $PdCl_2$- bzw. $NiCl_2$- Lösung) an. Die gewünschte Metallabscheidung kann stromlos z.B. mit Kupfer oder Silber oder auch Nickel oder galvanisch z.B. mit Kupfer, Nickel oder Edelmetallen oder auch durch chemische und galvanische Abscheidungen kombiniert erfolgen.

Je nach Anwendungszweck kann eine bei der Abscheidung erreichbare aufrauhende Zerklüftung der Oberfläche zweckmäßig sein, die zu einer vorteilhaften Oberflächenvergrößerung führt.

Von besonderem Interesse ist ein Metallgewebe mit Köper-Tresse bzw. mit umgekehrter Tressen-Bindung im Falle einer galvanischen Abscheidung, die wahlweise nur an einer oder auch beiden Oberflächen eines solchen Metallgewebes vorgenommen werden kann. Da der Transport der abzuscheidenden Metallionen durch die elektrischen Feldlinien bestimmt wird, beschränkt sich die Abscheidung weitgehend auf die außenliegende Oberfläche, während die abgeschirmten inneren Oberflächen nicht nennenswert beschichtet werden. Dadurch wird erreicht, daß die Volumenporosität des Metalltuchs weitgehend erhalten bleibt.

Eine solche Gewebeart ist deshalb speziell für die Anwendung als Kontaktsieb für katalytische Reaktionen geeignet, da bei diesem Material mit erheblichen Anteilen an von außen weitgehend abgeschirmten "innenliegenden" Oberflächen durch eine erste das gesamte Material erfassende chemische Beschichtung zunächst ein erster Katalysator aufgetragen werden kann, wonach anschließend durch galvanische Abscheidung, die sich auf die freiliegende "äußere" Oberfläche konzentriert, ein- oder beidseitig ein weiteres Metall bzw. zwei weitere Metalle auf den verschiedenen Seiten aufgetragen werden können.

Besonders günstig können solche (insbesondere mehrfach) beschichteten Metallgewebe bei chemischen Prozessen z.B. bei der Ammoniaksynthese oder bei der Abgasreinigung (insbesondere von Autoabgasen) eingesetzt werden, wobei zweckmäßigerweise beschichtete Metallgewebe in gewellter oder gefälteter Form zusammen mit vorgeschalteten, gröberen Geweben oder auch mehrere, hintereinander angeordnete Metallgewebe in Form eines Feinsiebstapels zur Anwendung kommen können, der allgemein quer zur Fläche oder auch für katalytische Zwecke in Richtung der zwischen aufeinanderfolgenden Lagen gebildeten Kanäle angeströmt werden kann.

Feinsiebstapel aus gewellten Feinsieben, deren Wellungsrichtungen einen Winkel miteinander bilden, erweisen sich für die katalytische Gasreinigung als besonders geeignet, da das allgemein parallel zur Feinsiebfläche strömende Gas zu einer fortwährenden Umlenkung bzw. Verlangsamung und Beschleunigung gezwungen wird. Solche Feinsiebstapel für die Gasreinigung können sich an den Wellungsbergen berühren und bilden - in Montagerahmen versteift - hoch wirksame relativ geräuscharme Kontaktmassen.

Die stromlose Abscheidung (a) und die galvanische Abscheidung (b) unterscheiden sich hinsichtlich des resultierenden Produktes, wie anhand von photographischen Abbildungen und Vergrößerungen von beschichteten Metallgeweben ermittelt werden konnte:

a) Im Falle der stromlosen Abscheidung werden sämtliche Gewebeoberflächen,auch die im Inneren des Metalltuches liegenden, gleichmäßig beschichtet. Durch die abgeschiedene Menge kann somit die Maschenweite über die gesamte Gewebedicke ("Volumenporösität") reguliert werden, wie durch rasterelektronenmikroskopische Aufnahmen (V=300) von 15μ Tressengewebe bei chemischer Beschichtung mit Nickel ermittelt werden konnte. Es zeigte sich deutlich eine Porenverkleinerung mit zunehmender Beschichtungsdicke. Durch eine solche stromlose Abscheidung läßt sich eine beliebige Filterfeinheit erreichen, wobei gleichzeitig eine Steigerung der mechanischen Festigkeit erreicht wird. Das dicht aufgebrachte Metall schützt das eigentliche Gewebe bereits in dünner Schicht vor Korrosion (bei entsprechender Materialwahl). Daraus resultieren nicht nur wirtschaftliche Vorteile ( so kann z.B. sehr feines Gewebe mit Goldoberfläche mit<50 μm Maschenweite nur so erzeugt werden, da Gold selbst nicht derart fein verwebbar ist). Nachteilig ist jedoch die Abnahme der "Volumenporosität", wodurch der Druckverlust bei der Durchströmung erhöht wird.

b) Im Falle einer galvanischen Abscheidung können je nach Gegenelektrode eine oder auch beide Oberflächen des Metallgewebes beschichtet werden, da der Transport der abzuscheidenden Metallionen, wie oben angegeben,durch den Feldlinienverlauf bestimmt wird. Im Fall der erwähnten Tressengewebe werden die abgeschirmten "inneren " Oberflächen nicht nennenswert beschichtet werden. Dadurch wird erreicht, daß die Volumenporosität des Metallgewebes weitgehend erhalten bleibt.

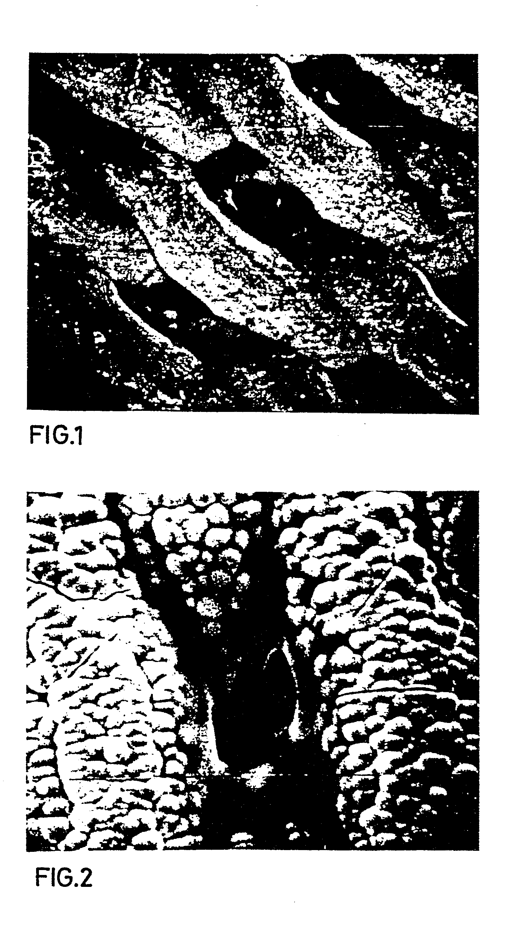

Je nach Beschichtungsdauer werden sich nun die "außenliegenden" Öffnungen des Metallgewebes an der Oberfläche membranartig schließen. So zeigt Figur 1 in 800facher Vergrößerung ein Metallgewebe nach einer Unterbrechung des galvanischen Abscheidevorgangs. Man erkennt eine Verkleinerung der Öffnung mindestens um den Faktor 2. Da sich der Prozeß der Abscheidung durch die Zeitdauer oder die Stromstärke steuern läßt, ist es möglich, eine beliebige Öffnungsgröße bis hin zum vollständigen Abschluß zu erreichen. Es können somit mikroporöse metallische Membranen hergestellt werden, die für Partikelgrößen bis hinunter in den Molekularbereich als Filter wirken. Dies ist u.a. für osmotische Prozesse von Bedeutung.

c)

Die beiden vorstehend erwähnten Verfahren - stromlose und galvanische Abscheidung - lassen sich auch kombiniert anwenden. So ist es möglich, ein preiswertes Grundgewebe zunächst stromlos gegen Korrosion zu veredeln, ohne nenneswert die Volumenporosität zu verkleinern. Anschließend kann durch galvanische Abscheidung die Porengröße nach Bedarf eingestellt werden.

Die vorstehend beschriebenen Feinsiebe und Feinsiebstapel können - wie erwähnt - für katalytsiche Zwecke angewandt werden. Gebräuchliche Katalysatormaterialien wie z.B. Pd,Au, Pt etc. lassen sich sowohl stromlos als auch galvanisch abscheiden. Gemäß der Erfindung ist es daher möglich, mit sehr geringen Katalysatormengen sehr große Katalysatoroberflächen zu erreichen, wie aus Figur 2 hervorgeht. Diese zeigt Köpertressegewebe der Firma Dürener Metalltuch (Micronicgewebe mit 5 $\mu$m Maschenweite) mit einer einseitigen Abscheidung von

-7-

3 bis 4 μm Pd. Die Vergrößerung der wirksamen Katalysatoroberfläche ist deutlich erkennbar. Gleichzeitig sieht man, daß der aufgebrachte Katalysator auch die Filterfeinheit verbessert. Untersuchungen hinsichtlich der Permeation bzw. des Durchsatzes von Gas durch beschichtete (Figur 2) bzw. unbeschichtete Metallgewebe ergaben einen Volumendurchsatz von Argon bei 21 $^{\circ}$C und einem $\Delta$p von 27 mbar beim beschichteten Metallgewebe von ca 21,7 Nl/m$^2$s und beim unbeschichteten Gewebe von 28,9 Nl/m$^2$s (der Druck vor dem Gewebe lag bei 1,2 bar). D.h., die Durchsatzverminderung ist relativ gering. Wie weiter oben angegeben, können (insbesondere beim Köper-tresse- bzw. PZ-Gewebe ) je Seite verschiedene Katalysatoren aufgebracht werden. Durch zusätzliche stromlose Vorbeschichtung ist somit die Erzeugung von drei verschiedenen Katalysatorbeschichtungen auf einem Metallgewebe möglich: Innerhalb des Gewebes liegt das stromlos abgeschiedene Material frei, an den beiden Oberflächen je ein verschiedenes, galvanisch abgeschiedenes Material. Bei diesen Materialien kann es sich um unterschiedliche Metalle oder um unterschiedliche Metall-Legierungen oder Konzentrationen von Legierungskomponenten handeln.

Durch Aneinanderlegen von zwei unterschiedlichen, mit je drei verschiedenen Katalysatoren beschichteten Metallgeweben können somit z.B. sechs verschiedene Katalysatoroberflächen auf sehr engem Raum zusammengebracht werden. Eine Fixierung bzw. Lagestabilisierung von zwei oder mehreren Metallgeweben gegeneinander ist durch gemeinsames Falten oder Wellen möglich.

Selbstverständlich können zwischen- oder nachgeschaltete Temperbehandlungen nach Bedarf vorgesehen werden.

Die Feinsiebe und -siebstapel sind für Filterzwecke allgemein und für katalytische Prozesse sowie Kombinationen aus beiden brauchbar. Sie sind je nach Oberflächenbeschichtung auch als Ad- oder Absorber wirksam.

Kernforschungsanlage Jülich
Gesellschaft mit beschränkter Haftung

P a t e n t a n s p r ü c h e

1. Feinsieb in Form eines beschichteten Metallgewebes, d a -
   d u r c h   g e k e n n z e i c h n e t , daß die Beschichtung durch eine die Maschenweite verengende galvanische und/oder chemische Metallabscheidung gebildet wird.

2. Feinsieb nach Anspruch 1, g e k e n n z e i c h n e t
   d u r c h  eine die Oberfläche vergrößernde, aufrauhende
   Metallabscheidung.

3. Feinsieb nach Anspruch 1 oder 2, d a d u r c h   g e -
   k e n n z e i c h n e t , daß die Beschichtung galvanisch
   und von beiden Seiten des Gewebes mit unterschiedlichen
   Metallen erfolgt ist.

4. Feinsieb nach Anspruch 3, g e k e n n z e i c h n e t
   d u r c h  eine chemisch erfolgte Vorbeschichtung mit einem
   dritten Metall.

5. Feinsieb nach einem der vorangehenden Ansprüche, insbesondere nach Anspruch 4, d a d u r c h   g e k e n n -
   z e i c h n e t, daß das Metallgewebe eine Köper-Tresse-
   Bindung und/oder eine umgekehrte Tressenbindung (PZ) aufweist.

6. Feinsieb nach einem der vorangehenden Ansprüche, d a -
   d u r c h   g e k e n n z e i c h n e t , daß die Abscheidung
   durch Edelmetall, insbesondere Platinmetalle, auf einem
   unedleren Metallgewebe gebildet wird.

,699 G

7. Feinsieb nach einem der vorangehenden Ansprüche, g e - k e n n z e i c h n e t   d u r c h   eine zur Vergrößerung der Oberfläche gewellte oder gefältelte Form.

8. Feinsieb nach einem der vorangehenden Ansprüche, g e - k e n n z e i c h n e t   d u r c h   eine bis auf $\angle$ 0,1 $\mu$m verengte Maschenweite.

9. Verfahren zur Herstellung eines metallischen Feinsiebes ausgehend von einem Metallgewebe durch Auftrag von Metall, d a d u r c h   g e k e n n z e i c h n e t , daß man das gereinigte metallisch blanke Metallgewebe galvanisch und/ oder chemisch (stromlos) mit Metall beschichtet.

10. Verfahren nach Anspruch 9, d a d u r c h   g e k e n n - z e i c h n e t , daß das Metallgewebe zuerst chemisch mit einem ersten Metall und danach galvanisch mit wenigstens einem weiteren Metall beschichtet wird.

11. Verfahren nach Anspruch 9 odere insbesondere 10, d a - d u r c h   g e k e n n z e i c h n e t , daß das Metall- gewebe auf seinen beiden Seiten mit unterschiedlichen Metallen beschichtet wird.

12. Verfahren nach Anspruch 11, d a d u r c h   g e k e n n - z e i c h n e t , daß die unterschiedlichen Metalle galvanisch abgeschieden werden.

13. Verfahren nach einem der Ansprüche 9 bis 12, d a d u r c h   g e k e n n z e i c h n e t , daß als Metall zumindest bereichsweise katalytisch wirksames Metall abgeschieden wird.

14. Verfahren nach Anspruch 13, d a d u r c h   g e k e n n - z e i c h n e t , daß das katalytisch wirksame Metall nur auf einer Seite des Metallgewebes abgeschieden wird.

15. Verfahren nach Anspruch 13, d a d u r c h  g e k e n n -
z e i c.h n e t , daß auf den beiden Seiten unterschiedliche  katalytisch wirksame Metalle abgeschieden werden.

16. Feinsiebstapel aus zwei oder mehreren, insbesondere mit
Abstand übereinandergeschichteten Feinsieben nach einem
der Ansprüche 1 bis 8.

17. Feinsiebstapel nach Anspruch 16, g e k e n n.z e i c h n e t
d u r c h aufeinanderfolgende gewellte Feinsiebe, die sich
an Wellungsbergen berühren.

18. Feinsiebstapel nach Anspruch 17, d a d u r c h  g e -
g e.k e.n n z e i c h n e t ,daß die Wellungsrichtungen
aufeinanderfolgender Feinsiebe einen Winkel zueinander
bilden.

19. Verwendung der Feinsiebe nach einem der Ansprüche 1 bis 8
und insbesondere nach Anspruch 5, für katalytische
Zwecke, insbesondere als Abgaskatalysator.

20. Verwendung der Feinsiebe nach einem der Ansprüche 1 bis 8
benachbart zu Filtermatten gröberer Maschenweite.

21. Verwendung der Feinsiebe nach einem der Ansprüche 16 bis
18 in Form eines Stapels von beschichteten Metallgeweben,
die untereinander Strömungskanäle bilden und längs dieser
Kanäle durchströmt werden.

FIG.1

FIG.2